# EUROPÄISCHE PATENTANMELDUNG

(11) **EP 0 618 566 A1**
(43) Veröffentlichungstag der Anmeldung: **05.10.1994**
(21) Anmeldenummer: 94104462.0
(22) Anmeldetag: 22.03.1994
(51) Int. Cl.: G10L 5/06, G10L 7/08, G10L 9/06

(54) **Geräuschreduktion zur Spracherkennung**

(30) Priorität: 29.03.1993 DE 4309985
(71) Anmelder: Alcatel SEL Aktiengesellschaft, D-70435 Stuttgart (DE); ALCATEL N.V., NL-1077 XX Amsterdam (NL)
(72) Erfinder: Trompf, Michael Gert, D-71282 Hemmingen (DE)
(74) Vertreter: Knecht, Ulrich Karl

(57) **Zusammenfassung**

Zur Spracherkennung in geräuschbehafteter Umgebung muß eine Geräuschreduktion durchgeführt werden. Die Spracherkennung muß robust gegen Geräusche sein.

Verwende zusätzliche Informationen aus geeigneten Signalrepräsentanten am Eingang des neuronalen Netzes zur Geräuschreduktion

## Beschreibung

Die Erfindung betrifft ein Verfahren zur Spracherkennung in geräuschbehafteter Umgebung.

Bisher bekannte Verfahren führen z.B. eine Spracherkennung in geräuschbehafteter Umgebung durch, indem eine Geräuschreduktion durchgeführt wird.

Eine Methode der Geräuschreduktion ist z.B. eine Cepstral-Geräuschreduktion mittels eines Multilayer-Netzwerkes auf der Basis von LPC (Linear Predictive Coding) -Cepstral-Koeffizienten. Hierbei wird von einem Netzwerk zur Geräuschreduktion eine nichtlineare autoassoziative Abbildung von einer Anzahl geräuschbehafteter Cepstral-Koeffizienten auf eine Anzahl geräuschfreier Cepstral-Koeffizienten im cepstralen Bereich durchgeführt.

Die durchschnittliche Spracherkennungsrate liegt bei ungefähr 65 % wenn die beschriebene Geräuschreduktion durchgeführt wird ("A Cepstral Noise Reduction Multi-layer Neural Network; Helge B.D. Sorensen; ICASSP91; Toronto; (Canada); May 14-17, 1991).

Eine weitere Methode der Geräuschreduktion im Cepstral-Bereich basiert auf einem sich selbst-strukturierenden universellen Netz. Mit einem solchen Netz wird eine Geräuschreduktion in den folgenden drei Modellen möglich. Das erste Modell führt eine Spektralanalyse der gesprochenen Sprache durch. Das zweite Modell ist ein Selbst-strukturierendes Neuronales Geräusch-Reduktions Modell SNNR (≙ Self-structuring Neural Noise Reduction). Die bereits geräuschreduzierte Ausgabe des SNNR-Netzwerks wird durch ein Spracherkennungssystem bestehend aus sogenannten Hidden Control Neural Networks (HCNN) ausgebreitet ("A self-structuring Neural Noise Reduction Model"; Helge B.D. Sorensen and Uwe Hartmann; University of Aalberg; Denmark; nach Mai 1991).

Eine ebenfalls bereits bekannte Methode zur Geräuschreduktion verwendet sogenannte Connectionist Models. Mittels eines Algorithmus wird ein Netz bestehend aus vier Schichten trainiert, um geräuschbehaftete Signale auf geräuschfreie Signale abzubilden. Das Netzwerk ist somit in der Lage Geräuschreduktion zu erlernen. Es ist somit ebenfalls in der Lage geräuschbehaftete Signale die nicht Bestandteil der trainierten Signale sind von den Geräuschen zu befreien. Ebenso ist ein solches Netz in der Lage geräuschbehaftete Signale von Geräuschen zu befreien die ebenfalls nicht antrainiert wurden ("Noise Reduction Using Connectionist Models"; Shin'ichi Tamura and Alex Waibel; Osaka; (Japan); ICASSP88; April 1988)

Desweiteren werden bei Verwendung neuronaler Netze zur Geräuschreduktion verschiedene Netzwerktopologien und verschiedene Varianten von Trainingsalgorithmen getestet und optimiert. Hierdurch soll die Robustheit von Spracherkennung gegen Umgebungsgeräusche verbessert werden ("Building Blocks for a Neural Noise Reduction Network für Robust Speech Recognition"; Michael Trompf; Proceedings of EUSIPCO 1992; Brüssel (Belgium); 24-27.08.92).

Der Erfindung liegt die Aufgabe zugrunde eine Methode zur Geräuschreduktion zur Spracherkennung von geräuschbehafteter Sprache zu entwickeln. Als weitere Aufgabe soll ein neuronales Netz entwickelt werden das die vorgenannte Aufgabe erfüllt.

Die Aufgaben werden verfahrensgemäß gelöst durch die Lehre des ersten Patentanspruchs und durch die Lehre des fünften Patentanspruchs.

Ein Vorteil der vorliegenden Erfindung ist, daß mittels des Verfahrens eine robuste Spracherkennung von geräuschbehafteter Sprache durchgeführt werden kann. Dabei wird unter Robustheit die Störungsunempfindlichkeit der Spracherkennung gegen eintrainierte, aber auch gegen nicht eintrainierte Geräusche verstanden. Zur Robustheit zählt ebenso die richtige Erkennung von nicht eintrainierten Worten in geräuschbehafteter Umgebung. Das hier verwendete Verfahren führt durch verbesserte Geräuschreduktion zu einer sehr robusten Spracherkennung.

Ein weiterer Vorteil liegt darin, daß mit dem verwendeten Verfahren das zur neuronalen Geräuschreduktion verwendete neuronale Netz eine kürzere Netzentwicklungszeit benötigt.

Vorteilhafte Weiterentwicklungen des Verfahrens sind den Unteransprüchen 2 bis 4 zu entnehmen. Vorteilhafte Weiterentwicklungen des neuronalen Netzes sind den Unteransprüchen 6 bis 8 zu entnehmen.

Nach Unteranspruch 2 wird eine spezielle Fehlerberechnungsmethode erläutert. Die Bildung des quadratischen Abbildungsfehlers erweist sich als besonders vorteilhaft.

Nach Unteranspruch 3 wird eine Gewichtung der Abbildungsfehler einzelner Vektoren vorgenommen. Die gewichteten einzelnen Abbildungsfehler führen zu dem gesamten Abbildungsfehler.

Nach Unteranspruch 4 wird erläutert, daß durch Auswahl von geeigneten Signalrepräsentanten eine geeignete Topologie des neuronalen Netzes festgelegt wird.

Nach Unteranspruch 6 wird erläutert wie das neuronale Netz trainiert wird. Es werden Knoten zu einer Eingangsschicht des neuronalen Netzes hinzugefügt indem ein Abbildungsfehler zwischen geräuschreduziertem Vektor und geräuschfreiem Vektor berechnet und minimiert wird. Durch die Vergrößerung der Eingangsschicht ist eine Vergrößerung der Eingangsrepräsentanten möglich.

Nach Unteranspruch 7 wird als Fehlerberatungsmethode die Bildung des quadratischen Fehlers bevorzugt.

Nach Unteranspruch 8 wird, wie bereits in Unteranspruch 3 erläutert, eine Gewichtung der Abbildungsfehler einzelner Vektoren vorgenommen.

Ausführungsbeispiele der Erfindung werden anhand der folgenden Figuren erläutert. Folgende Figuren zeigen:
- Fig. 1: Blockschaltbild einer Spracherkennungsvorrichtung die das erfindungsgemäße Verfahren ausführt,
- Fig. 2: schematische Darstellung des neuronalen Netzes zur Geräuschreduktion.

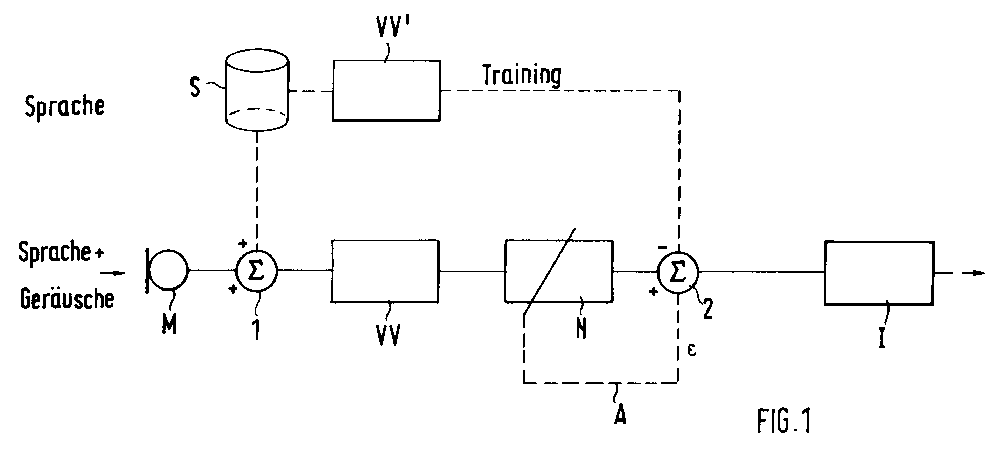

Im folgenden Teil wird das erfindungsgemäße Verfahren zur Spracherkennung von Sprache in geräuschbehafteter Umgebung anhand von Figur 1 erläutert.

Eine Spracherkennungsvorrichtung die in der Lage ist das erfindungsgemäße Verfahren auszuführen bedient sich einer Geräuschreduktion, die mittels eines neuronalen Netzes ausgeführt wird.

Sprache und Geräusche werden über ein Mikrofon M auf die Spracherkennungsvorrichtung gegeben. Die mit Geräuschen behaftete Sprache entspricht geräuschbehafteten Sprachsignalen und wird im folgenden auch so bezeichnet. Reine geräuschfreie Sprache wird im folgenden als geräuschfreies Sprachsignal bezeichnet. Das Mikrofon M ist über einen ersten Summierer 1 mit einer Vorverarbeitungseinrichtung VV verbunden. Die Vorverarbeitungseinrichtung VV ist mit einem neuronalen Netz N, welches die neuronale Geräuschreduktion durchführt, verbunden. Das neuronale Netz N ist über einen zweiten Summierer 2 mit einer Spracherkennungseinheit I verbunden.

Die geräuschbehafteten Sprachsignale werden über das Mikrofon M auf die Vorverarbeitungseinrichtung VV gegeben.

Die Vorverarbeitungseinrichtung VV kann beispielsweise eine LPC (Linear Predictive Coding)-Cepstral-Analyse durchführen, wie sie aus dem Bereich der Sprachverarbeitung bereits bekannt ist.

Bei dieser LPC-Cepstral-Analyse werden die geräuschbehafteten Sprachsignale mit einer festgelegten Frequenz, z.B. 3,4 KHz tiefpaßgefiltert. Daraufhin werden LPC-Cepstral-Koeffizienten gebildet. Üblicherweise werden zwischen 10 und 15 Koeffizienten gebildet.

Die Vorverarbeitungseinrichtung VV bildet somit aus den geräuschbehafteten Sprachsignalen eine Folge von geräuschbehafteten Vektoren, auch Merkmalsvektoren genannt. Darauf werden die so vorverarbeiteten geräuschbehafteten Sprachsignale, also die geräuschbehafteten Vektoren, auf das neuronale Netz N gegeben. Das neuronale Netz N führt eine Geräuschreduktion durch.

Unter Geräuschreduktion wird die Abbildung von geräuschbehafteten auf geräuschfreie Vektoren verstanden.

Die bisher beschriebene Vorrichtung stellt die Spracherkennunngsvorrichtung dar, mit der die Geräuschreduktion vorgenommen werden kann.

Um diese Geräuschreduktion, also die Abbildung, durchführen zu können, muß das neuronale Netz N trainiert werden.

Neuronale Netze werden vortrainiert, d.h. vor dem Einsatz, wie hier zur Spracherkennung in geräuschbehafteter Umgebung, wird das neuronale Netz in die Lage versetzt einen bestimmten, in geräuschfreier Umgebung vortrainierten Wortschatz ebenfalls in geräuschbehafteter Umgebung zu erkennen. Zusätzlich wird das neuronale Netz in die Lage versetzt bestimmte Geräusche auch als Geräusch, also als nicht erwünschten Störeffekt zu erkennen.

Ein neuronales Netz ist im Allgemeinen nur auf wenige Worte und Geräusche vortrainiert. Ein solches Netz wird als Minimalnetz bezeichnet.

Ist das neuronale Netz in der Trainingsphase im Einsatz, wie hier als neuronales Netz N zur Geräuschreduktion, kann es währenddessen "lernen" also weitertrainiert werden. Die Topologie des Minimalnetzes besteht aus wenigen untereinander verbundenen Knoten. "Lernt" das neuronale Netz, so werden weitere Knoten hinzugefügt. Das erfolgt z.B. mittels eines CASCADE-Algorithmus. Bei dem CASCADE-Algorithmus werden ausgehend von dem Minimalnetz weitere Knoten trainiert und sukzessive hinzugefügt. Zum Training wird beispielsweise ein Fehlervergleich zwischen Soll- und Istwert vorgenommen. Sind die Werte identisch, so gilt der Knoten als trainiert und er wird zu dem Netz hinzugefügt. Das Angleichen von dem Ist- an den Sollwert erfolgt mittels eines iterativen Verfahrens.

Zum Training des neuronalen Netzes N besteht die Spracherkennungsvorrichtung zusätzlich noch aus einem Speicher S in dem geräuschfreie Sprachsignale gespeichert sind. Der Speicher S ist über eine zweite Vorverarbeitungseinrichtung VV' mit dem zweiten Summierer 2 verbunden. Die zweite Vorverarbeitungseinrichtung VV' arbeitet mit der gleichen LPC-Cepstral-Analysemethode wie die Vorverarbeitungseinrichtung VV. Demnach befinden sich am Ausgang der Vorverarbeitungseinrichtung VV' geräuschfreie Vektoren.

Der Speicher S ist ebenfalls mit dem ersten Summierer 1 verbunden.

Von dem zweiten Summierer 2 besteht eine weitere Verbindung, eine Rückkopplungsstrecke A, zu dem neuronalen Netz N.

Im speziellen erfolgt die Geräuschreduktion und das Training folgendermaßen:
Die Folge von geräuschbehafteten Vektoren wird auf das neuronale Netz N gegeben. Es wird eine erste neuronale Geräuschreduktion durchgeführt, indem die geräuschbehafteten Vektoren auf geräuschfreie Vektoren abgebildet werden. Am Ausgang des neuronalen Netzes liegt somit ein geräuschreduzierter Vektor an, der im Idealfall geräuschfrei sein kann.

Über die zweite Vorverarbeitungseinrichtung VV' stehen an dem zweiten Summierer 2 ebenso gerauschfreie Vektoren zur Verfügung. An dem zweiten Summierer 2 werden die Vektoren addiert und der Abbildungsfehler zwischen geräuschfreiem Vektor und geräuschreduzeirtem Vektor wird gebildet.

Der Abbildungsfehler kann z.B. als quadratischer Abbildungsfehler berechnet werden. Explizit wird der quadratische Fehler gemittelt über mehrere geräuschbehaftete und geräuschfreie Vektoren berechnet.

Zusätzlich kann noch eine Gewichtung vorgenommen werden. Für die Spracherkennung "wichtige" Vektoren mit dem dazugehörenden Abbildungsfehler werden stärker gewichtet. Unter "wichtigen" Vektoren werden diejenigen verstanden, die im hörbaren Frequenzbereich sind und die deshalb für die Spracherkennung maßgeblich sind.

Ist der Abbildungsfehler nicht gleich Null, so wird mittels eines iterativen Verfahrens eine Annäherung an Null angestrebt. Um den Abbildungsfehler zu Beginn der Iteration möglichst klein zu halten, werden Zusatzinformationen aus geeigneten Siganlrepräsentanten am Eingang des neuronalen Netzes ausgewählt. Unter geeigneten Signalrepräsentanten werden solche mit nicht allzu großen Verzerrungen, verursacht durch Geräusche, verstanden. In der Menge der Eingangssignale am Eingang des neuronalen Netzes befinden sich ebenfalls redundante Signale, so daß repräsentative Signale ausgewählt werden können. Zusatzinformationen stellen z.B Kontextinformationen, Ableitungen oder Extraktionsverfahren für bestimmte Merkmale dar. Nach dem ersten Iterationsschritt wird ein Soll- und Istwertvergleich vorgenommen.

Über die Rückkopplungsstrecke A wird ein zweiter Iterationsschritt ermöglicht. Wiederum erfolgt ein Soll- und Istwertvergleich. Ist der Abbildungsfehler größer so erfolgt ein Iterationsschritt mit anderen Koeffizienten. Ist der Abbildungsfehler minimiert worden, so erfolgt ein neuer Iterationsschritt mit dem Ziel der erneuten Minimierung. Ist der Abbildungsfehler gleich Null, oder verkleinert sich der Abbildungsfehler nicht mehr, ist die Gräuschreduktion beendet und in der Spracherkennungseinheit I kann eine Spracherkennung vorgenommen werden.

Das mittels des iterativen Verfahrens geräuschreduzierte Wert gilt in dem neuronalen Netz N nun als eintrainiert und ein Knoten wird zu der Netztopologie hinzugefügt.

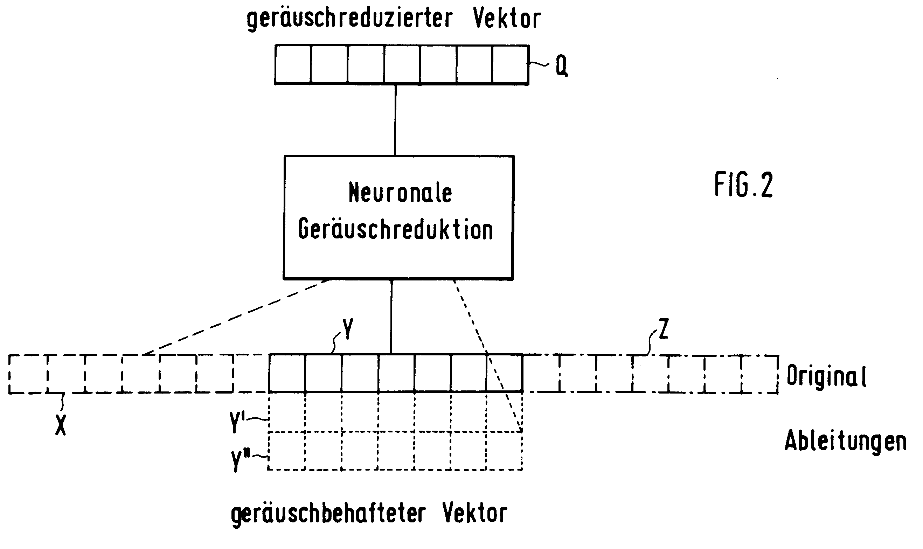

Im folgenden Teil wird anhand von Figur 2 das neuronale Netz für die neuronale Geräuschreduktion näher erläutert.

Für die neuronale Geräuschreduktion steht nach der Vorverarbeitungseinrichtung VV die geräuschbehaftete Sprache in Form von geräuschbehafteten Vektoren zur Verfügung. Hierbei wird unterschieden zwischen geräuschbehafteten Vektoren Y die zur Zeit der neuronalen Geräuschreduktion am neuronalen Netz N anliegen, welche mit durchgezogenen Linien gekennzeichnet sind, und zwischen geräuschbehafteten Vektoren X die zu einen vorherigen Zeitpunkt an dem neuronalen Netz angelegen haben. Diese Vektoren X sind durch eine gebrochene Linie gekennzeichnet.

Von den derzeitig anliegenden geräuschbehafteten Vektoren Y können z.B. seine erste Ableitung Y' und eine zweite Ableitung Y'' gebildet werden.

Diese Ableitungen Y' und Y'' sind durch gepunktete Linie gekennzeichnet. Um aus der geräuschbehafteten Vektoren Y mittels der neuronalen Geräuschreduktion geräuschreduzierte Vektoren Q zu erzeugen, stehen der derzeitge Vektor Y, dessen Ableitungen Y', Y'' und der alte Vektor X der neuronalen Geräuschreduktion zur Verfügen.

Um auf zukünftige neuronale Geräuschreduktion von geräuschbehafteten Vektoren schließen zu können, werden alle vorgenannten Informationen die aus der Geräuschreduktion gezogen werden konnten verwendet, um auf zukünftige geräuschbehaftete Vektoren Z zu schließen und die Geräuschreduktion zu vereinfachen. Die zukünftige geräuschbehafteten Vektoren Z sind strich-punktiert dargestellt. Mit der Vereinfachung der Geräuschreduktion ist eine Vereinfachung der Spracherkennung von Sprache in geräuschbehafteter Umgebung mit eingeschlossen.

## Patentansprüche

1. Verfahren zur Spracherkennung in geräuschbehafteter Umgebung unter Verwendung eines neuronalen Netzes (N), wobei das neuronale Netz (N) eine neuronale Geräuschreduktion durchführt, indem es in einer Trainingsphase mittels eines iterativen Verfahrens einen Abbildungsfehler zwischen geräuschfreien Vektoren an einem Ausgang des neuronalen Netzes und geräuschreduzierten Vektoren an dem Ausgang des neuronalen Netzes reduziert, und wobei durch Zusatzinformationen, die aus einem geeigneten Signalrepräsentanten am Eingang des neuronalen Netzes (N) ausgewählt wird, der Abbildungsfehler weiter reduziert wird.

2. Verfahren zur Spracherkennung nach Anspruch 1, bei dem als Abbildungsfehler der quadratische Abbildungsfehler gebildet wird.

3. Verfahren nach Anspruch 1 oder 2, bei dem der Abbildungsfehler eine Gewichtung erhält, die von der Wichtigkeit der Vektoren für die Spracherkennung abhängig ist.

4. Verfahren nach einem der Ansprüche 1 bis 3, bei der eine geeignete Topologie des neuronalen Netzes (N) durch Auswahl von geeigneten Signalrepräsentanten festgelegt wird.

5. Neuronales Netz zur Geräuschreduktion für Spracherkennung in geräuschbehafteter Umgebung mit einem Algorithmus zur automatischen Netzgenerierung, bei dem der Algorithmus eine Auswahl eines geeigneten Signalrepräsentanten automatisch ausführt.

6. Neuronales Netz nach Anspruch 5, welches sukzessive Knoten zu einer Eingangsschicht des neuronalen Netzes hinzufügt, wobei ein neuer Knoten trainiert wird, indem ein Abbildungsfehler berechnet und minimiert wird.

7. Neuronales Netz nach Anspruch 6, bei dem als ein Abbildungsfehler der quadratische Abbildungsfehler gebildet wird.

8. Neuronales Netz nach einem der Ansprüche 6 oder 7, bei dem der Abbildungsfehler eine Gewichtung erhält, die von der Wichtigkeit der Vektoren für die Spracherkennung abhängig ist.
